# FASCICULE DE BREVET EUROPEEN

(11) **EP 0 845 146 B1**
(45) Date de publication et mention de la délivrance du brevet: **05.09.2001**
(21) Numéro de dépôt: 97928342.1
(22) Date de dépôt: 12.06.1997
(51) Int. Cl.: G21C 7/10, G21C 7/24

(54) **CRAYON ABSORBANT POUR GRAPPE DE COMMANDE DE REACTEUR NUCLEAIRE ET PROCEDE DE FABRICATION**
ABSORBERSTAB FÜR KERNREAKTOR REGELSTABSPINNE UND VERFAHREN ZUR HERSTELLUNG
ABSORBENT PENCIL FOR A NUCLEAR REACTOR CONTROL CLUSTER, AND METHOD FOR MAKING SAME

(30) Priorité: 14.06.1996 FR 9607430
(43) Date de publication de la demande: 03.06.1998
(73) Titulaire: FRAMATOME, 92400 Courbevoie (FR); COMPAGNIE GENERALE DES MATIERES NUCLEAIRES, 78140 Velizy Villacoublay (FR)
(72) Inventeur: HERTZ, Dominique, F-69110 Sainte Foy lès Lyon (FR); ROMARY, Jean-Michel, 2440 GEEL (BE)
(74) Mandataire: Fort, Jacques
(86) Numéro de dépôt international: FR9701054
(87) Numéro de publication internationale: WO9748104

(56) Documents cités:
- EP-A- 0 421 868
- FR-A- 2 604 188
- US-A- 3 505 064

## Description

La présente invention concerne les crayons absorbants destinés à être intégrés à des grappes de commande pour réacteur nucléaire. Elle est notamment utilisable dans les réacteurs modérés et refroidis par de l'eau sous pression, dont le coeur est constitué par des assemblages de combustible ayant chacun un faisceau de crayons de combustible retenus aux noeuds d'un réseau régulier par un squelette formé d'embouts reliés par des tubes-guides portant des grilles de maintien des crayons. Dans ce cas, chaque grappe est constituée par une araignée liée à un mécanisme de commande et portant des crayons contenant du matériau absorbant destinés à être insérés plus ou moins profondément dans les tubes guides ou même extraits totalement du coeur.

Habituellement, le réglage de puissance et l'arrêt du réacteur mettent en oeuvre plusieurs groupes de grappes de constitutions différentes (telles que des grappes dites "noires", très absorbantes, et des grappes "grises" moins absorbantes).

Les grappes "noires" sont constituées de crayons contenant un matériau fortement absorbant, tel qu'un alliage Ag-In-Cd ou le carbure de bore B₄ C, dans une gaine, généralement en acier inoxydable. Ces crayons présentent des limitations lorsqu'ils sont destinés à des réacteurs mis en oeuvre en "suivi de charge" et/ou à une utilisation très longue. L'alliage Ag In Cd est sujet au fluage et au gonflement sous irradiation. Le carbure B₄C présente un gonflement important sous irradiation. L'hafnium est un absorbant neutronique qui ne flue pas aux températures de travail et qui ne gonfle pas sous irradiation. Toutefois, il exige d'être protég de l'hydruration s'il est dans une gaine en acier ou de l'usure s'il est amené à frotter contre les éléments de guidage.

Le remplacement de Ag In Cd par le hafnium dans une gaine permet d'éviter le gonflement à condition d'éviter l'hydruration de l'hafnium. Mais les tentatives de constituer des crayons de ce genre se sont heurtées à des difficultés. Après usure de la pellicule d'oxyde naturelle de l'hafnium, par suite du frottement, l'hafnium absorbe de l'hydrogène qui a traversé la gaine et gonfle, à un point tel qu'il peut devenir nécessaire de changer prématurément des grappes.

Un problème similaire se pose pour les crayons des grappes "grises" contenant des crayons moins absorbants.

"On a déjà proposé (EP-A-0 421 868) un crayon absorbant comportant, le cas échéant, un barreau d'hafnium allié ou non, gainé ou non, glissant dans un tube guide d'assemblage. Il n'est pas envisagé un crayon absorbant comportant une gaine en alliage zirconium-hafnium fermée par des *bouchons et contenant du matériau absorbant.*

*Par ailleurs on connaît, parmi les alliages ziconium-hafnium, l'alliage à* 4,5 % en poids de zirconium, présenté comme ayant une résistance élevée à l'oxydation et une résistance mécanique élevée à haute température (US-A-*3 505 064)."*

L'invention vise notamment à fournir un crayon absorbant capable de supporter une irradiation de longue durée en réacteur en exploitation et pouvant être rendu compatible avec les crayons actuels, notamment pour constituer des grappes de remplacement.

Dans ce but l'invention propose notamment un crayon absorbant pour grappe de commande de réacteur nucléaire conforme à l'objet de la revendication 1.

Ainsi l'absorbant à la partie inférieure du crayon, celle qui est le plus fréquemment dans le coeur, est constitué d'un matériau qui ne flue pas. Le gonflement susceptible de fissurer une gaine n'est pas non plus à craindre. Ce matériau, lorsqu'il constitue un bouchon long, peut être traité en même temps que la gaine, généralement par oxydation, pour limiter l'usure dans un guide de grappe ou un assemblage combustible. En ajustant le volume d'une cavité à l'intérieur du bouchon ou la longueur du bouchon, la masse du crayon peut être réduite et rendue compatible avec des mécanismes de commande existants. De même le pouvoir absorbant peut être adapté à l'utilisation souhaitée.

La gaine peut être en alliage Hf-Zr contenant au moins 18 % en poids de Hf, pouvant contenir quelques centaines à quelques milliers de ppm de fer et/ou d'oxygène. L'adjonction d'oxygène jusqu'à environ 1800 ppm permet d'augmenter les caractéristiques mécaniques sans affecter de façon inacceptable la facilité de mise en forme. L'ajout de fer, à une teneur ne dépassant pas 800 ppm, augmente la tenue en corrosion dans l'eau et la vapeur sous pression.

La teneur en hafnium des matériaux absorbants est choisie en fonction de divers paramètres. Si on souhaite abaisser le coût de la matière première, une teneur d'environ 30 % Hf - 70 % Zr en poids est favorable du point de vue économique, car c'est la teneur de la solution mère lors de la séparation zirconium-hafnium. L'utilisation directe de l'alliage issu de la solution mère abaisse le coût de la matière presque à celui du Zircaloy 4. De plus la malléabilité de l'alliage est améliorée par la présence de zirconium.

Si en revanche on souhaite donner à la gaine une absorption maximale à masse donnée, on choisira un alliage ne contenant pratiquement pas de zirconium.

La résistance à l'usure de la gaine est accrue par le traitement de surface qui est un chromage ou, avantageusement, une oxydation thermique en atmosphère de O₂ ou O₂-Ar durant quelques heures. Cette oxydation peut notamment être dans l'oxygène-argon durant 3 à 15 heures entre 850° C et 950° C. A cette température, 5 à 6 heures de traitement conduisent à une épaisseur d'oxyde de 10 µm pour un alliage ne contenant pas de fer, à une épaisseur de 6-7 µm pour un alliage contenant environ 350 ppm de fer. L'oxyde adhérent apporte une protection très efficace contre l'usure et l'hydruration ultérieure dès que l'épaisseur est supérieure à 5 µm. La gaine aura généralement une épaisseur d'au moins 0,4 mm.

L'hafnium et le zirconium participent à la rétention de l'hydrogène produit par l'oxydation externe et la rétention du tritium produit éventuellement par la transformation sous irradiation d'absorbant à base de bore contenu dans le crayon.

Le bouchon inférieur pourra être constitué par un barreau plein en hafnium métallique ayant une teneur en zirconium ne dépassant pas 4 % en poids, soudé à la gaine, par exemple par faisceau d'électrons, TIG ou laser. Lorsqu'il remplace l'absorbant habituellement contenu dans la partie basse da la gaine, il occupe une longueur importante (par exemple 750 mm pour un réacteur actuel à eau sous pression de 900 MWe et 1000mm pour un 1300 MWe). Un tel bouchon long ne gonfle pas et ne flue pas. Il écarte les problèmes de gonflement et de fissuration. Il peut être traité en même temps que la gaine par oxydation (ou formation d'autre revêtement) pour limiter l'usure dans le guide de grappe ou l'assemblage combustible. Pour adapter la masse, le bouchon peut être creux.

Le bouchon supérieur qui ferme la gaine supporte moins de contraintes neutroniques que les autres éléments, ce qui laisse davantage de possibilités de choix. Toutefois, il doit être soudable à une gaine constituée par un alliage de Zr et Hf (ce qui est le cas des alliages à base de Zr, Hf et Ti) et susceptible d'être protégé contre la corrosion.

Le bouchon supérieur ne peut être en Zircaloy du fait d'une tenue mécanique limitée dans le temps si on protège l'ensemble du crayon par oxydation après soudage du bouchon supérieur. On préfèrera en général un alliage Ti-Zr, notamment Ti 80 - Zr 20 ou un alliage identique à celui de la gaine.

L'absorbant contenu dans la partie supérieure du crayon peut avoir diverses natures. Il est cependant avantageux d'utiliser un empilement de pastilles de diborure d'hafnium-zirconium, par exemple (Hf 28-Zr 72) B₂, issu de la boruration du mélange mère Hf 30 - Zr 70.

Du fait de l'absorption neutronique de l'hafnium contenu dans la gaine et dans le borure d'hafnium, l'absorption par le bore 10 et la production d'hélium, responsables du gonflement des absorbants à base de borures, sont réduites. De plus, le système cristallin hexagonal de HfB₂ et ZrB₂ permet l'insertion d'un plus grand nombre d'atomes d'hélium dans son réseau que le B₄C qui est rhombohédrique et cela diminue le relâchement d'hélium. Enfin, l'absorbant (Hf, Zr) B₂ est thermiquement stable et n'interdit pas le traitement thermique d'oxydation sur le crayon terminé.

Le ressort de maintien des pastilles doit être en un matériau supportant des températures élevées si l'on souhaite effectuer une oxydation thermique sur le crayon terminé. On peut utiliser un super alliage à base de nickel ou un alliage réfractaire Ti-Zr, ou à base d'hafnium.

L'invention propose aussi un procédé de fabrication de crayon absorbant conforme à l'objet de la revendication 10.

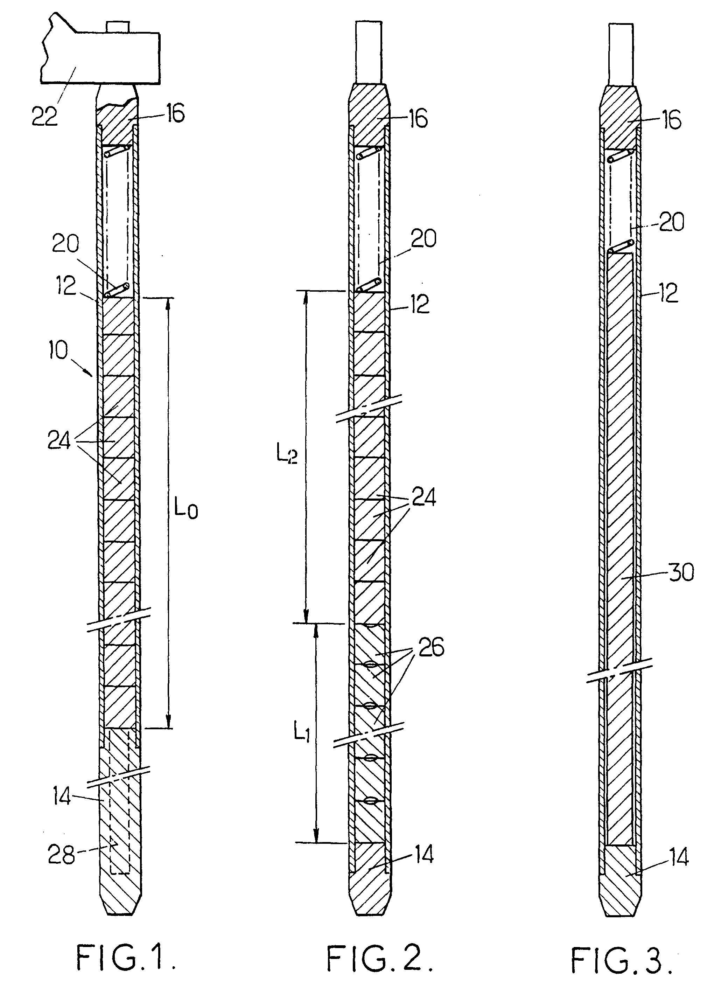

L'invention sera mieux comprise à mesure de la description qui suit de modes particuliers de réalisation de l'invention, donnés à titre d'exemples non limitatifs. La description se réfère aux figures 1-3 qui l'accompagnent et montrent des crayons en coupe longitudinale.

On donnera tout d'abord des exemples de composition utilisables pour des crayons destinés à des grappes devant se substituer à des grappes noires existantes. La masse du crayon doit être la même que celle du crayon remplacé, à quelques pour cent près, et l'absorption neutronique doit être égale ou légèrement supérieure.

Le crayon 10 montré en figure 1 (où l'échelle n'est pas respectée pour plus de clarté) comporte une gaine 12 fermée par des bouchons 14 et 16 et contenant une colonne de matériau absorbant retenue en appui contre le bouchon inférieur 14 par un ressort 20 comprimé entre la colonne et le bouchon supérieur 16. Le bouchon supérieur 16 permet de fixer le crayon à un doigt d'une araignée 22.

Pour adapter l'absorption neutronique, il est possible d'agir sur différents paramètres :
- ajustage de la densité des pastilles (Hf, Zr) B₂ ou remplacement de ces pastilles par de l'hafnium.
- utilisation d'un bouchon inférieur creux pour compenser l'augmentation d'absorption avec le diamètre extérieur,
- utilisation d'une gaine en matériau moins absorbant que Hf 30-Zr 70.

Le risque de masse excessive de la grappe de remplacement se pose surtout pour les grappes "noires" des réacteurs de 1300 MWe existants, qui utilisent comme absorbant un alliage Ag-In-Cd, moins dense que l'hafnium, et B₄C moins dense que (Hf-Zr)B₂. L'ajustage peut s'effectuer par emploi d'un bouchon inférieur creux à teneur élevée en Hf et contenant éventuellement des pastilles absorbantes.

Inversement, le risque de masse trop faible peut se poser dans des grappes de remplacement pour un réacteur de 900 MWe, où on remplace de l'alliage Ag-In-Cd par du (Hf-Zr)B₂ moins dense à la partie supérieure. Dans ce cas, l'allongement du bouchon inférieur ou le remplissage de la gaine de pastilles en hafnium, de densité élevée, permet d'augmenter la masse. Du fait de la présence d'une gaine en alliage imperméable à l'hydrogène, il n'y a pas d'hydruration des pastilles en hafnium.

On donnera maintenant quelques exemples, correspondant à des crayons pour grappe noire et pour grappe grise.

### Crayon pour grappe noire de réacteur REP de 900 MWe :

### Example 1 :

### Crayon à bouchon inférieur long

Le mode de réalisation de la figure 1 comporte un bouchon inférieur 14 "long", occupant au moins 40 % de la longueur du crayon, en alliage Hf-Zr, surmonté par une colonne de pastilles de (Hf-Zr)B₂.

Bouchon supérieur 16 : Zircaloy 4, ou alliage Ti80-Zr 20 %, ou alliage Hf 30-Zr 70 %.

Ressort 20 : super alliage à base de nickel, ou alliage Ti80-Zr 20 %, ou Hf 30-Zr 70 %.

Gaine 12 : Hf 30 - Zr70 % de 194 cm de long, ayant un diamètre extérieur de 9,68 mm et une épaisseur de 0,98 mm.
Bouchon inférieur : Hf de 181 cm de long.
Absorbant 24 : colonne de pastilles de (Hf 28 - Zr 72)B₂ à 85 % de la densité théorique d'environ Lo = 194 cm de long.

### Example 2 :

Crayon à bouchon inférieur court et colonne de pastilles de Hf au-dessus du bouchon (figure 2).
Mêmes ressorts et bouchon supérieur que pour l'exemple 1.
Gaine 12 : Hf30Zr70 % de 372 cm de long, épaisseur de 0,47 mm.
Bouchon inférieur : Hf de 3 cm de long.
Pastilles 26 au-dessus du bouchon inférieur : Hf de 8,66 de diamètre, sur une longueur de L1 = 244 cm.
- colonne 24, absorbant de même composition que dans l'exemple 1, diamètre 8,53 mm sur une longueur de 108 cm.

### Crayon pour grappe noire de réacteur REP de 1300 MWe

### Exemple 3

Bouchon inférieur long.
Bouchon supérieur en Zircaloy 4, ou en alliage Ti-Zr ou en alliage Hf30-Zr70 %.
Ressort en super-alliage à base de nickel.
Gaine de 332 cm en Hf30-Zr 70 %, diamètre 9,68 mm et épaisseur 0,98 mm.
Bouchon inférieur creux en Hf de 106 cm de long, de 9,68 mm de diamètre, avec cavité 28 de 6,12 mm de diamètre absorbant = colonne de pastilles de (Hf28-Zr72)B₂ à 85 % de la densité théorique, de longueur Lo = 314 cm.

### Crayon pour grappe grise de réacteur de 900 Mwe

Dans ce cas le crayon peut être massif et constitué d'alliage d'hafnium protégé contre l'hydruration par une couche d'oxyde résistant à l'usure. Le crayon est en forme de tube fermé par des bouchons.

### Exemple 4 (figure 3)

Crayon constitué par un tube 12, formant gaine, un Hf30/Zr 70 % de 9,68 mm de diamètre et 1,54 mm d'épaisseur, avec un bouchon renforceur 14 en Hf 30-Zr 70 % de 3 cm de long, contenant une cale 30 en acier inoxydable de 360 cm de long destinée à augmenter la masse.

### Crayon pour grappe grise de réacteur de 1300 MWe

### Example 5 (figure 3)

Tube en Hf30-Zr 70 % de 9,68 mm de diamètre et 1,09 mm d'épaisseur de 433 cm de long.
Bouchon inférieur en Hf 30-Zr 70 % de 3 cm de long.
Cale en acier inoxydable de 42 cm de long et 7,4 mm de diamètre.

Un procédé de fabrication avantageux des crayons pour grappe noire consiste à fabriquer, par des procédés qui peuvent être classiques, les bouchons , la gaine, les pastilles d'absorbant, et le ressort. Les composants sont assemblés et les bouchons soudés, par exemple par soudage TIG ou laser. Finalement, une couche de protection contre l'usure est créée par oxydation ménagée de la surface extérieure en atmosphère d'oxygène pur ou de O₂-Ar, à une température comprise entre 850° C et 950° C. La durée de l'opération est telle que la couche de protection atteigne au moins 5 µm si une durée d'utilisation de plusieurs dizaines d'années est recherchée. Il est en revanche inutile d'aller au-delà de 30 µm.

## Revendications

1. Crayon absorbant pour grappe de commande de réacteur nucléaire, comportant une gaine (12) en alliage Hf-Zr fermée par des bouchons (14, 16) et contenant, au moins dans sa partie basse, un absorbant. neutronique, la gaine et les bouchons étant revêtus d'une couche extérieure de protection, formée d'oxyde ou de chrome, d'au moins 5 µm d'épaisseur, le bouchon inférieur (14) étant ou bien en matériau métallique à base d'hafnium et occupant au moins 15 % de la hauteur ou bien court et surmonté d'une colonne de matériau absorbant (24, 26, 28) pour arriver à au moins 15% de la hauteur.

2. Crayon selon la revendication 1, caractéris en ce que la couche est en oxyde de 5 à 30 µm d'épaisseur.

3. Crayon selon la revendication 1 ou 2, **caractérisé en ce que** la gaine contient au moins 18 % en poids de Hf.

4. Crayon selon la revendication 3, **caracterisé en ce que** la gaine est en alliage 30 % Hf-70% Zr environ.

5. Crayon selon l'une quelconque des revendications 1 à 4, **caractérisé en ce que** l'alliage Hf-Zr contient 0 à 1800 ppm d'oxygène et 0 à 800 ppm de fer.

6. Crayon selon l'une quelconque des revendications 1 à 5, **caractérisé en ce que** le bouchon inférieur est en alliage d'hafnium et de zirconium à moins de 4 % de zirconium en poids.

7. Crayon selon la revendication 1 ou 2, **caractérisé en ce que** le bouchon inférieur est en alliage hafnium-zirconium et est surmonté d'une cale en acier inoxydable.

8. Crayon selon l'une quelconque des revendications 1 à 6, **caractérisé en ce que** l'absorbant est constitué, au-dessus du bouchon inférieur, par une colonne de pastilles de borure.

9. Crayon selon la revendication 8, **caractérisé en ce que** le borure est (Hf, Zr) B₂.

10. Procédé de fabrication de crayon suivant la revendication 1, **caractérisé en ce qu**'on constitue la gaine, l'absorbant, et un ressort de maintien de la colonne, on assemble ces composants, on soude les bouchons, et on crée une couche de protection contre l'usure par oxydation ménagée de la surface extérieure en atmosphère d'oxygène pur ou de O₂ - Ar, à une température comprise entre 850° C et 950° C.

## Patentansprüche

1. Absorberstab für Kemreaktor-Steuerbündel mit einer durch Stopfen (14, 16) verschlossenen Hülle aus Hafnium-Zirkonium-Legierung, der zumindest in seinem unteren Abschnitt einen Neutronen-Absorber enthält, wobei die Hülle und die Stopfen mit einer äußeren Schutzschicht aus Oxid oder Chrom von mindestens 5 um Dicke überzogen sind, wobei der untere Stopfen (14) entweder aus Metall auf der Basis von Hafnium ist und mindestens 15% der Höhe einnimmt oder aber kurz und von einer Säule aus Absorbermaterial (24, 26, 28) überragt ist, um auf mindestens 15% der Höhe zu reichen.

2. Stab nach Anspruch 1, **dadurch gekennzeichnet**, dass die Schicht aus Oxid 5 bis 30 µm dick ist.

3. Stab nach Anspruch 1 oder 2, **dadurch gekennzeichnet**, dass die Hülle mindestens 18 Gew.% Hafnium enthält.

4. Stab nach Anspruch 3, **dadurch gekennzeichnet**, dass die Hülle aus einer Legierung von ungefähr 30% Hafnium und 70% Zirkonium besteht.

5. Stab nach einem der Ansprüche 1 bis 4, **dadurch gekennzeichnet**, dass die Hafnium-Zirkonium-Legierung 0 bis 1800 ppm Sauerstoff und 0 bis 800 ppm Eisen enthält.

6. Stab nach einem der Ansprüche 1 bis 5, **dadurch gekennzeichnet**, dass der untere Stopfen aus einer Legierung aus Hafnium und Zirkonium mit mindestens 4 Gew.% Zirkonium besteht.

7. Stab nach Anspruch 1 oder 2, **dadurch gekennzeichnet**, dass der untere Stopfen aus Hafnium-Zirkonium-Legierung besteht und darüber eine Beilagescheibe aus rostfreiem Stahl angeordnet ist.

8. Stab nach einem der Ansprüche 1 bis 6, **dadurch gekennzeichnet**, dass der Absorber oberhalb des unteren Stopfens von einer Säule aus Borid-Pellets gebildet wird.

9. Stab nach Anspruch 8, **dadurch gekennzeichnet**, dass das Borid (Hf, Zr) B₂ ist.

10. Verfahren zur Herstellung eines Stabs nach Anspruch 1, **dadurch gekennzeichnet**, dass die Komponenten Hülle, Absorber und Haltefeder der Säule hergestellt und zusammengesetzt werden, die Stopfen verschweißt werden und durch gelenkte Oxidation der Außenfläche in reinem Luftsauerstoff oder O₂-Ar bei einer Temperatur zwischen 850°C und 950°C eine Schutzschicht gegen Verschleiß erzeugt wird.

## Claims

1. An absorber rod for a nuclear reactor control cluster, comprising cladding (12) of Hf-Zr alloy closed by plugs (14,16) and containing, at least in its bottom portion, a neutron absorber, the cladding and the plugs being coated by an outer oxide or chromium protective layer having a thickness of at least 5 µm, the bottom plug (14) being either of hafnium-based metal material and being over at least 15% of the height, or else being short and surmounted by a column of absorbent material (24,26,28) to reach at least 15% of the height.

2. A rod according claim 1, **characterized in that** the layer is of oxide and is 5 µm to 30 µm thick.

3. A rod according to claims 1 or 2, **characterized in that** the cladding contains at least 18% by weight Hf.

4. A rod according to claim 3, **characterized in that** the cladding is of an alloy comprising about 30% Hf and 70% Zr.

5. A rod according to any one of claims 1 to 4, **characterized in that** Hf-Zr alloy contains 0 to 1800 ppm oxygen and 0 to 800 ppm iron.

6. A rod according to any one of claims 1 to 5, **characterized in that** the bottom plug is made of an alloy of hafnium and zirconium having less than 4% zirconium by weight.

7. A rod according to claim 1, 2 or 3, **characterized in that** the bottom plug is of hafnium-zirconium alloy and is surmounted by packing of stainless steel.

8. A rod according to any one of claims 1 to 6, **characterized in that** the bottom plug is constituted by a column of boride pellets.

9. A rod according to claim 8, **characterized in that** the boride is (Hf,Zr)B₂.

10. A method of manufacturing a rod according to claim 7, **characterized in that** the cladding, the absorber, and a column hold-down spring are made, these components are assembled together, the plugs are welded on, and a protective layer against wear is created by controlled oxidation of the outside surface in an atmosphere of pure oxygen or of O₂-Ar, at a temperature lying in the range 850°C to 950°C.
